# EUROPÄISCHE PATENTSCHRIFT

(11) **EP 2 026 927 B1**
(45) Veröffentlichungstag und Bekanntmachung des Hinweises auf die Patenterteilung: **15.06.2011**
(21) Anmeldenummer: 07722315.4
(22) Anmeldetag: 27.04.2007
(51) Int. Cl.: B23K 1/008, B23K 3/08, F27D 1/18, F27B 9/14

(54) **VERFAHREN UND VORRICHTUNG ZUR TEMPERATURBEHANDLUNG, INSBESONDERE LOTVERBINDUNG**
METHOD AND DEVICE FOR HEAT TREATMENT, ESPECIALLY CONNECTION BY SOLDERING
PROCÉDÉ ET DISPOSITIF DE TRAITEMENT THERMIQUE, EN PARTICULIER UNE JONCTION PAR SOUDURE

(30) Priorität: 29.05.2006 DE 102006025193; 26.06.2006 DE 102006029593
(43) Veröffentlichungstag der Anmeldung: 25.02.2009
(73) Patentinhaber: PINK GmbH Thermosysteme, 97877 Wertheim (DE)
(72) Erfinder: WEBER, Stefan, 97877 Wertheim (DE)
(74) Vertreter: Tappe, Hartmut
(86) Internationale Anmeldenummer: PCT/DE2007/000758
(87) Internationale Veröffentlichungsnummer: WO 2007/137547

(56) Entgegenhaltungen:
- WO-A-2006/111328
- JP-A- 3 106 562
- JP-A- 8 295 926
- US-A- 3 618 919
- US-A- 4 932 864
- US-A1- 2003 007 921
- US-A1- 2005 173 497
- US-B1- 6 796 483

## Beschreibung

Die vorliegende Erfindung betrifft ein Verfahren zur Temperaturbehandlung von Werkstücken oder Bauteilen, insbesondere zur Herstellung einer Lotverbindung zwischen einem Lotmaterial und zumindest einem als Lotmaterialträger dienenden Bauteil oder Werkstück durch Aufschmelzen des auf dem Lotmaterialträger angeordneten Lotmaterials gemäß dem Oberbegriff des Anspruchs 1 und eine zur Durchführung des Verfahrens geeignete Vorrichtung gemäß dem Oberbegriff des Anspruchs 8 [siehe, z.B. US 6 796 483 B1). Bei bekannten Verfahren der eingangs genannten Art, bei denen sowohl eine Beheizung als auch eine Kühlung des zu belotenden Bauteils in einer einzigen Prozesskammer erfolgt, ist zum dauerhaften Betrieb einer entsprechenden Vorrichtung in Intervallen von oft nur relativ wenigen Belotungszyklen eine Reinigung der Prozesskammer notwendig. Aufgrund des relativ hohen Temperaturgefälles zwischen einer Beheizungs- und einer Kühlzone kondensieren die beim Aufheizprozess entstehenden flüchtigen Abdampfungen des Lotmaterials in der kälteren Kühlzone und bilden insbesondere auf den in der Kühlzone angeordneten Komponenten und Einrichtungen einen durch die Reinigung zu entfernenden Niederschlag. Wegen des dadurch wiederholt durchzuführenden Reinigungsvorgangs muss der Betrieb der nach den bekannten Verfahren arbeitenden Vorrichtungen immer wieder unterbrochen werden. Hierdurch ergeben sich in der Praxis erhebliche Produktionseinbußen.

Die US 2003/007921 offenbart eine Vorrichtung zur Temperaturbehandlung, welche aus einer Reaktorröhre und einer Abkühlkammer gebildet ist. Die Reaktorröhre dient zum kalzinieren von Phosphor über einen Zeitraum von mehreren Stunden, wobei nach Beendigung des Vorgangs das kalzinierte Material in die Abkühlkammer überführt wird. Die Reaktorröhre ist durch einen wärmeisolierten und abdichtenden Trennwandschieber von der Abkühlkammer getrennt, wobei der Trennschieber selbst auch gekühlt sein kann.

Das US-Patent US 6,796,483 B1 zeigt ein Verfahren bzw. eine Vorrichtung zur Herstellung einer Lotverbindung zwischen einem Lotmaterial und einem Bauteil mit einer Mehrzahl voneinander unabhängiger Prozesskammern. In den jeweils von der Umgebung abgeschlossenen Prozesskammern erfolgt ein Beheizen bzw. Abkühlen des Bauteils, wobei Trennwände die Prozesskammern voneinander gasdicht trennen.

Aus der US 3,618,919 geht eine Trennwandvorrichtung für einen Muffelofen hervor. Insbesondere die in den Figuren 7 und 8 gezeigte Trennwand ist als Blech ausgebildet und wird vermittels einer Flüssigkeitsleitung gekühlt. Werkstücke werden kontinuierlich auf einem Transportband durch den Muffelofen gefördert, wobei jeweils zur Passage eines Werkstücks die Trennwand geöffnet wird. Von einem gasdichten Abschluss zweier Kammerbereiche kann daher in diesem Fall nicht ausgegangen werden. Jedoch wird im Bereich der Trennwand ein Gas zur Bildung einer Sperrschicht eingeblasen und abgesaugt, so dass kein unmittelbarer Gasaustausch zwischen den Kammerbereichen erfolgen kann.

Die JP 03106562 A zeigt einen Mehrkammerlötofen mit einer beidseitig beheizbaren Lötkammer und einer Abkühlkammer. Alle Prozesskammern sind durch Verschlusseinrichtungen voneinander abtrennbar und insbesondere die Lötkammer kann mit einem Vakuum und/oder einem Schutzgas beaufschlagt werden.

Die US 4,932,864 beschreibt einen mehrstufigen Glühofen mit einer Kammer zum Glühen von Werkstücken und einer nachfolgenden Abkühlkammer. Ein Verschließen der Kammern erfolgt insbesondere im Innenbereich des Ofens durch wärmeisolierte Trennwandschieber.

Ein Verfahren und eine Vorrichtung zum Kondensationslöten zeigt die US 2005/0173497 A1. Ein für einen kontinuierlichen Materialdurchlauf ausgebildeter Lötofen weist eine Löt- und eine Abkühlkammer auf, die durch eine Verschlusseinrichtung voneinander abtrennbar sind.

Die JP 08295926 zeigt einen Ofen zur Wärmebehandlung von Werkstücken, bei dem über eine Abkühlkammer eine Beschickung einer Heizkammer mit Werkstücken bzw. deren Entnahme aus der Heizkammer erfolgt. Beide Kammerbereiche verfügen im Bereich zwischen den Kammern jeweils über dicht abschließende Verschlusseinrichtungen.

Der vorliegenden Erfindung liegt daher die Aufgabe zugrunde, ein Verfahren beziehungsweise eine Vorrichtung vorzuschlagen, deren Betrieb im Wesentlichen kontinuierlich, ohne die bekannten kurzen Reinigungsintervalle, erfolgen kann und so einen höheren Produktionsausstoß ermöglicht.

Zur Lösung dieser Aufgabe weist das erfindungsgemäße Verfahren die Merkmale des Anspruchs 1 auf. Bei dem erfindungsgemäßen Verfahren erfolgen die Beheizung und das Abkühlen des Bauteils in zwei durch eine Kondensationseinrichtung voneinander trennbaren Kammerbereichen der Prozesskammer.

Durch die zwischen den Kammerbereichen wirksame Kondensationseinrichtung erfolgt ein Niederschlag der beim Aufheizprozess entstehenden flüchtigen Abdampfungen auf der Kondensationseinrichtung, die quasi schutzschildartig eine Kondensation im gekühlten Kammerbereich und somit insbesondere auf einer der in diesem Kammerbereich angeordneten Kühleinrichtungen verhindert.

Das erfindungsgemäße Verfahren lässt sich grundsätzlich ganz allgemein zur Temperaturbeaufschlagung von Werkstücken oder Bauteilen bei der Wärmebehandlung, wie beispielsweise Tempern, Glühen und dergleichen, einsetzen. Ein besonderer Einsatzbereich liegt im Bereich der Herstellung von Lotverbindungen, die vermittels Lotpaste durchgeführt werden, wie beispielsweise bei der Herstellung elektronischer Bauelemente und Baugruppen.

Der Produktionsausstoß und somit die Effektivität des erfindungsgemäßen Verfahrens lässt sich noch weiter steigern, wenn gemäß einer besonders vorteilhaften Variante des Verfahrens die Beheizung mit einer Beheizungseinrichtung und das Abkühlen mit einer Kühleinrichtung erfolgen, die jeweils mit im Wesentlichen konstanter Temperatur betrieben werden. Hierdurch werden Zeitverluste bei der Durchführung des Verfahrens bedingt durch Aufheizvorgänge bzw. Abkühlvorgänge bis zum Erreichen der gewünschten Beheizungs- oder Kühltemperatur vermieden.

Als besonders vorteilhaft erweist es sich darüber hinaus, wenn vor der Beheizung des Lotmaterialträgers zur Trennung der Kammerbereiche die Kondensationseinrichtung aus einer Bereitstellungsposition in eine die Kammerbereiche abtrennende Trennwandposition verfahren wird. Hierdurch ist es möglich, den Lotmaterialträger beziehungsweise das Bauteil nach erfolgter Beheizung in dem zur Beheizung verwendeten Kammerbereich bei in der Bereitstellungsposition angeordneter Kondensationseinrichtung in den Abkühl-Kammerbereich zu überführen und nachfolgend die Kondensationseinrichtung wieder in ihrer Trennwandposition zu positionieren, so dass während der Abkühlung des Lotmaterialträgers im Abkühl-Kammerbereich keine wesentlichen Temperaturverluste in dem durch die Kondensationseinrichtung vom Abkühl-Kammerbereich abgetrennten Beheizungs-Kammerbereich auftreten.

Die Wirkung der Kondensationseinrichtung, also insbesondere die Kondensationsleistung, kann durch eine Kühlung der Kondensationseinrichtung wesentlich unterstützt beziehungsweise verstärkt werden. Eine besonders einfache Realisierung der Kühlung der Kondensationseinrichtung wird möglich, wenn die Kondensationseinrichtung während der Anordnung in Bereitstellungsposition gekühlt wird, in der sich die Kondensationseinrichtung im Wesentlichen außerhalb des unmittelbaren Einflussbereiches des Beheizungs-Kammerbereichs befindet.

Die Sperr- oder Schutzschildwirkung der Kondensationseinrichtung zur Verhinderung eines Kondensatniederschlags im Abkühl-Kammerbereich kann wirkungsvoll dadurch unterstützt werden, dass während der Beheizung des Lotmaterialträgers in dem durch die Kondensationseinrichtung vom Abkühl-Kammerbereich abgeteilten Beheizungs-Kammerbereich eine Beaufschlagung des Beheizungs-Kammerbereichs mit einem Vakuum erfolgt. Auch kann bei Bedarf die gesamte Prozesskammer mit Vakuum beaufschlagt werden.

Wenn während der Beaufschlagung des Beheizungs-Kammerbereichs mit Vakuum eine Beaufschlagung des Abkühl-Kammerbereichs und/oder des Beheizungs-Kammerbereichs mit Inertgas oder reduzierendem Schutzgas erfolgt, kann ein wirkungsvoller Schutz der Lötpartner vor Luftsauerstoff erfolgen oder bestehende oxidierte Flächen können aufgebrochen werden. Darüber hinaus wird insbesondere bei einer Schutzgasbeaufschlagung des Abkühl-Kammerbereichs und gleichzeitiger Vakuumbeaufschlagung des Beheizungs-Kammerbereichs eine ebenfalls einem Kondensatniederschlag im Abkühl-Kammerbereich entgegenwirkende Gas-strömung in der Prozesskammer ermöglicht.

Um einem Temperaturgradienten im Lotmaterialträger während der Beheizung im Beheizungs-Kammerbereich weitestgehend entgegenzuwirken, erweist es sich als vorteilhaft, wenn während der Durchführung der Beheizung im Beheizungs-Kammerbereich der Lotmaterialträger zwischen der Beheizungseinrichtung und einer gegenüberliegend angeordneten Zusatzheizeinrichtung angeordnet ist.

Diese Zusatzheizeinrichtung kann vorteilhaft als Abstrahlheizung ausgebildet sein, wobei durch eine Temperaturregelung der Zusatzheizeinrichtung in besonderer Weise auf spezifische Materialeigenschaften des Lotmaterialträgers Rücksicht genommen werden kann.

Die erfindungsgemäße Vorrichtung zur Durchführung des vorstehend erläuterten Verfahrens weist die im Anspruch 8 definierten Merkmale auf.

Wie vorstehend schon Bezug nehmend auf das erfindungsgemäße Verfahren ausgeführt, erweist es sich hinsichtlich der Ausführung der erfindungsgemäßen Vorrichtung als vorteilhaft, wenn die Kondensationseinrichtung mit einer Kühleinrichtung versehen ist.

Wenn die Kühleinrichtung derart ausgebildet ist, dass sie zumindest in der Bereitstellungsposition der Kondensationseinrichtung mit dieser zusammenwirkt, ist es einerseits möglich, die Kühleinrichtung besonders effektiv einzusetzen, also in einer Phase des Verfahrens, in der sich die Kondensationseinrichtung im Wesentlichen außerhalb des Einflussbereiches des Beheizungs-Kammerbereichs befindet. Zum anderen ist es möglich, die Kühleinrichtung selbst außerhalb der Prozesskammer anzuordnen, so dass ein unerwünschter Kondensatniederschlag auf der Kühleinrichtung, der sich nachteilig auf den Wirkungsgrad der Kühleinrichtung auswirken könnte, im Wesentlichen unterbleibt.

Eine besonders vorteilhafte Ausgestaltung der Kondensationseinrichtung wird möglich, wenn diese als metallische Trennwandeinrichtung ausgebildet ist. Hierdurch weist die Kondensationseinrichtung einerseits eine vorteilhafte, große Wärmekapazität auf, zum anderen ist eine besonders Platz sparende Ausführung der Kondensationseinrichtung möglich. In besonderem Maße trifft dies zu, wenn die Kondensationseinrichtung als Trennblech ausgebildet ist.

Erfindungsgemäß ist die Kondensationseinrichtung so ausgebildet, dass bei Anordnung der Kondensationseinrichtung in Trennwandposition ein die Kammerbereiche der Prozesskammer kommunizierend miteinander verbindender Gasdurchlass ausgebildet ist, wodurch trotz des abschirmenden, einen Kondensatniederschlag im Abkühl-Kammerbereich unterdrückenden Effekts der Kondensationseinrichtung ein Gasaustausch zwischen den Kammerbereichen möglich ist.

Eine besonders wirkungsvolle Ausgestaltung des Gasdurchlasses ist gegeben, wenn zwischen der in Trennwandposition angeordneten Kondensationseinrichtung und einer Kammerwandung der Prozesskammer ein die Kammerbereiche kommunizierend miteinander verbindender Trennwandspalt ausgebildet ist, so dass einerseits über die gesamte Spaltfläche ein ausreichender Gasaustausch ermöglicht ist, andererseits jedoch aufgrund des mit einem Labyrinthquerschnitt versehenen Trennwandspalts ein Passieren des Spaltes durch die Kondensatmasse wirksam verhindert werden kann.

Unabhängig von der Ausbildung der Kondensationseinrichtung erweist es sich in jedem Fall als vorteilhaft, wenn gegenüberliegend der Beheizungseinrichtung im Beheizungs-Kammerbereich der Prozesskammer eine Zusatzheizeinrichtung angeordnet ist, so dass während der Beheizung eines Lotmaterialträgers dieser zwischen der Beheizungseinrichtung und der Zusatzheizeinrichtung angeordnet werden kann.

Nachfolgend wird die Durchführung einer Variante des erfindungsgemäßen Verfahrens mittels einer möglichen Ausführungsform der erfindungsgemäßen Vorrichtung anhand der Zeichnungen näher erläutert.

Es zeigen:
- **Fig. 1**: eine Belotungsvorrichtung in einem stationären Betriebszu- stand;
- **Fig. 2**: die in Fig. 1 dargestellte Belotungsvorrichtung in einer Be- schickungs- und Transferphase;
- **Fig. 3**: die in **Fig. 1** dargestellte Belotungsvorrichtung während der Beheizung des Lotmaterialträgers im Beheizungs- Kammerbereich;
- **Fig. 4**: die in **Fig. 1** dargestellte Belotungsvorrichtung während des Transfers des Lotmaterialträgers in den Abkühl- Kammerbereich;
- **Fig. 5**: die in **Fig. 1** dargestellte Belotungseinrichtung während des Kühlens des Lotmaterialträgers im Abkühl-Kammerbereich.

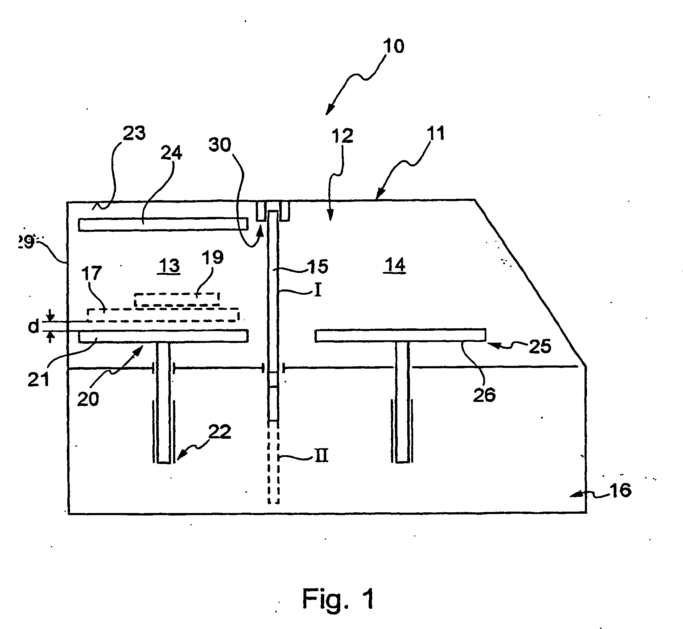

**Fig. 1** zeigt eine Belotungsvorrichtung 10 mit einem Gehäuse 11, in dem eine Prozesskammer 12 ausgebildet ist. Die Prozesskammer 12 weist einen ersten, bei dem Ausführungsbeispiel links dargestellten Beheizungs-Kammerbereich 13 und rechts davon einen zweiten Abkühl-Kammerbereich 14 auf. Zwischen dem Beheizungs-Kammerbereich 13 und dem Abkühl-Kammerbereich 14 ist eine im dargestellten Ausführungsbeispiel als Trennblech 15 ausgebildete Trennwandeinrichtung vorgesehen, die eine Abtrennung des Beheizungs-Kammerbereichs 13 gegenüber dem Abkühl-Kammerbereich 14 ermöglicht. Zur Aktivierung beziehungsweise Deaktivierung der den Beheizungs-Kammerbereich 13 vom Abkühl-Kammerbereich 14 abtrennenden Wirkung des Trennblechs 15 ist dieses von einer in **Fig. 1** dargestellten Trennwandposition I in eine in **Fig. 1** mit strichpunktiertem Linienverlauf dargestellte Bereitstellungsposition II verfahrbar. Die Bereitstellungsposition II kann je nach Ausbildung des Gehäuses innerhalb oder außerhalb der Prozesskammer, beispielsweise in einem Gehäuseunterteil 16, angeordnet sein.

Wie **Fig. 1** ferner zeigt, befindet sich im Beheizungs-Kammerbereich 13 eine Beheizungseinrichtung 20, die im vorliegenden Fall eine widerstandsbeheizte Heizplatte 21 aufweist, die vermittels einer Vorschubeinrichtung 22 in ihrem Abstand d gegenüber dem Bauteilträger 17 veränderbar ist. Die Vorschubeinrichtung 22 ermöglicht sowohl einen Flächenkontakt zwischen der Heizplatte 21 und einem in Fig. 1 strichpunktiert dargestellten Bauteilträger 17 als auch die Einstellung eines definierten Abstandes d zwischen der Heizplatte 21 und dem Bauteilträger 17, um so die gewünschte Temperatur des Bauteilträgers 17 und somit eines auf dem Bauteilträger angeordneten Substrats 19 einzustellen. Ergänzend zu der Beheizungseinrichtung 20 befindet sich oberhalb des Bauteilträgers 17 und unterhalb einer Deckenwandung 23 der Prozesskammer 12 eine Zusatzheizeinrichtung 24.

Im Abkühl-Kammerbereich 14 befindet sich eine Kühleinrichtung 25, die bei dem in **Fig. 1** dargestellten Ausführungsbeispiel eine von einer Kühlflüssigkeit durchströmte Kühlplatte 26 aufweist. Zur Einstellung einer Kühltemperatur wirkt die Kühlplatte 26 entsprechend der Heizplatte 21 mit einem darauf angeordneten Bauteilträger 17 zusammen.

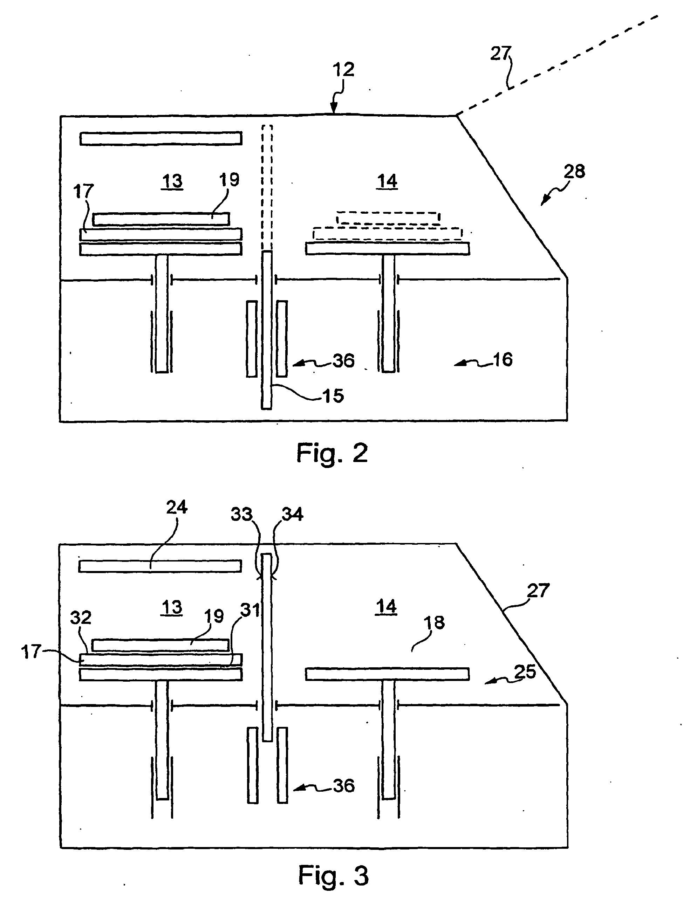

Die Prozesskammer 12 ist, wie in **Fig. 1** dargestellt, im Bereich des Abkühl-Kammerbereichs 14 mit einer mit einer Deckeleinrichtung 27 verschließbaren Zugriffsöffnung 28 (**Fig. 2**)versehen. In dem in **Fig. 1** dargestellten stationären Betriebszustand der Belotungsvorrichtung 10 ist die Zugriffsöffnung 28 mit der Deckeleinrichtung 27 verschlossen. In diesem Ausgangszustand befindet sich zunächst noch kein Substrat in der Prozesskammer 12. Der Beheizungs-Kammerbereich 13 und der Abkühl-Kammerbereich 14 sind gemäß der Erfindung durch das in seiner Trennwandposition angeordnete Trennblech 15 bis auf einen, in einem bei dem in Fig. 1 dargestellten Ausführungsbeispiel als Labyrinthspalt ausgebildeten, zwischen der Deckenwandung 23 und einer Seitenwandung 29 verlaufenden Wandspalt 30 verbleibenden Gasdurchlass luftdicht, man könnte sagen, optisch dicht, voneinander abgetrennt. In dieser Konfiguration können der Beheizungs-Kammerbereich 13 und der Abkühl-Kammerbereich 14 auf die jeweils gewünschte Temperatur temperiert und auf dieser konstant gehalten werden.

In der in **Fig. 2** dargestellten Beschickungs- und Transferphase wird die Deckeleinrichtung 27 zur Freigabe der Zugriffsöffnung 28 geöffnet und das zu Belotungszwecken beispielsweise mit einem pastösen Lotmaterial versehene Substrat 19 in den Abkühl-Kammerbereich 14 eingebracht (gestrichelt). Nach Verfahren des Trennbleches 15 in seine in **Fig. 2** dargestellte Bereitstellungsposition wird das Substrat 19 mit dem Bauteilträger 17 in den Beheizungs-Kammerbereich 13 eingebracht (durchgezogener Linienverlauf). Zum Transfer zwischen dem Beheizungs-Kammerbereich 13 und dem Abkühl-Kammerbereich 14 kann eine in der Prozesskammer 12 angeordnete Transfereinrichtung für den Bauteilträger 17 vorgesehen sein.

In der nun nachfolgenden, in **Fig. 3** dargestellten Beheizungsphase ist das Trennblech 15 wieder in seine Trennwandposition überführt. Zur Führung des Trennblechs 15 ist bei den in **Fig. 2 und 3** dargestellten Ausführungsbeispielen der Belotungsvorrichtung 10 im Bereich des Gehäuseunterteils 16 eine Vorschubeinrichtung 36 vorgesehen. Um je nach Materialstärke und Materialbeschaffenheit des zur Belotung im Beheizungs-Kammerbereich 13 angeordneten Substrats 19 zwischen einer Substratunterseite 31 und einer Substratoberseite 32 einen möglichst geringen Temperaturgradienten erzielen zu können, wird die Temperatur der Zusatzheizeinrichtung 24, mit der diese über Abstrahlung auf das Substrat 19 einwirkt, substratspezifisch eingestellt. Demgegenüber richtet sich die gewünschte Solltemperatur des Bauteilträgers 17 überwiegend nach der Lotmaterialzusammensetzung.

In der in **Fig. 3** dargestellten Beheizungsphase, in der sich das Trennblech 15 in seiner Trennwandposition befindet, dient das Trennblech 15 als Kondensationseinrichtung, derart, dass während des Aufschmelzens des Lotmaterials frei werdende, flüchtige Bestandteile des Lotmaterials enthaltende Dämpfe auf der als Kondensationsfläche 33 dienenden Oberfläche des Trennblechs 15 abgeschieden werden. Dabei wird der für die Kondensation auf der Oberfläche des Trennblechs 15 notwendige Temperaturgradient schon dadurch erreicht, dass das Trennblech 15 durch die im Abkühl-Kammerbereich 14 auf eine Kühloberfläche 34 des Trennblechs 15 wirkende Kühltemperatur gekühlt wird. Dadurch, dass bereits eine Kondensatbildung auf dem als Kondensationseinrichtung wirkenden Trennblech 15 erfolgt, ist sichergestellt, dass ein entsprechender Niederschlag im Abkühl-Kammerbereich 14 beziehungsweise auf der Kühleinrichtung 25 unterbleibt. Die Ausbildung des Trennwandspaltes 30 ermöglicht gleichzeitig während der Beheizung des Substrats 19 beziehungsweise dem Aufschmelzen des auf dem Substrat 19 angeordneten Lotmaterials die Ausbildung eines Vakuums im Beheizungs-Kammerbereich 13, ohne dass hierdurch entsprechende Vakuumkräfte auf das Trennblech 15 wirken würden, die ein Verfahren des Trennblechs 15 zwischen der Bereitstellungsposition und der Trennwandposition beeinträchtigen könnten.

Eine weitere Erhöhung der Kondensationsleistung auf der Kondensationsfläche 33 des Trennblechs 15 wird möglich, wenn zusätzlich zur rückwärtigen Beaufschlagung der Kühloberfläche 34 des Trennblechs 15 durch die im Abkühl-Kammerbereich 14 ausgebildete Temperatur eine unmittelbare Kühlung des Trennblechs 15 über eine im Gehäuseunterteil 16 angeordnete Kondensatorkühleinrichtung erfolgt. Die Kondensatorkühleinrichtung kann durch eine gekühlte Ausführung der Vorschubeinrichtung 36 des Trennblechs 15 erfolgen.

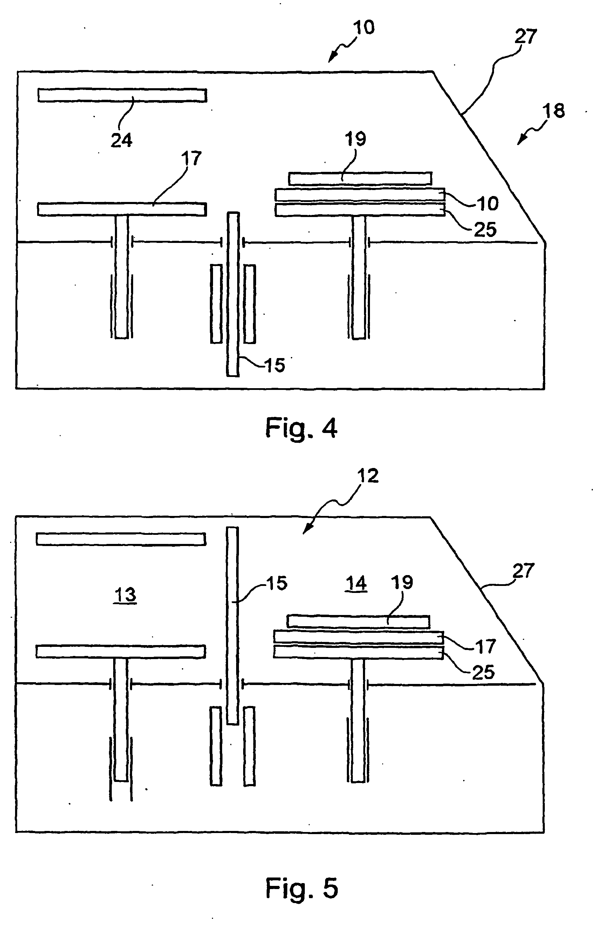

**Fig. 4** zeigt die Belotungsvorrichtung 10 in der Überführungsphase, in der das Substrat 19 nach Verfahren des Trennblechs 15 in seine Bereitstellungsposition, in der sich das Trennblech 15 im Wesentlichen im Gehäuseunterteil 16 befindet, mit dem Bauteilträger 17 aus dem Beheizungs-Kammerbereich 13 in den Abkühl-Kammerbereich 14 überführt wird.

**Fig. 5** zeigt schließlich die Belotungsvorrichtung 10 in der nachfolgenden Abkühlphase, in der sich bei noch geschlossener Deckeleinrichtung 27 und wieder in seine Trennwandposition zurückgefahrenem Trennblech 15 das Substrat 19 bei gleichzeitiger durch das Trennblech 15 erfolgender Abschirmung gegenüber einer Wärmeabstrahlung aus dem Beheizungs-Kammerbereich 13 auf dem gekühlten Bauteilträger 17 befindet. Nach erfolgter Abkühlung des Substrats 19 kann dann die Deckeleinrichtung 27 geöffnet und das Substrat 19 durch den Bediener durch die Zugriffsöffnung 28 der Belotungsvorrichtung 10 entnommen werden. Zur Fortsetzung des Belotungsverfahrens auf einem nachfolgenden Substrat kann dieses nun wieder, wie in **Fig. 2** dargestellt, in den Abkühl-Kammerbereich 14 eingebracht und in den Beheizungs-Kammerbereich überführt werden.

## Patentansprüche

1. Verfahren zur Temperaturbehandlung von Werkstücken oder Bauteilen (19), insbesondere zur Herstellung einer Lotverbindung zwischen einem Lotmaterial und zumindest einem als Lotmaterialträger dienenden Bauteil (19) oder Werkstück durch Aufschmelzen des auf dem Lotmaterialträger angeordneten Lotmaterials, wobei eine Beheizung und in einem nachfolgenden Verfahrensschritt ein Abkühlen zumindest eines Bauteils (19) in einer von der Umgebung abgeschlossenen Prozesskammer (12) erfolgt,
**dadurch gekennzeichnet,**
**dass** die Beheizung und das Abkühlen des Bauteils (19) in zwei voneinander trennbaren Kammerbereichen (13, 14) der Prozesskammer (12) erfolgen, wobei eine Kondensationseinrichtung (15) aus einer Bereitstellungsposition (II) in eine die Kammerbereiche (13, 14) abtrennende Trennwandposition (I) verfahren wird, und bei in Trennwandposition (I) angeordneter Kondensationseinrichtung (15) ein die Kammerbereiche (13, 14) kommunizierend miteinander verbindender Gasdurchlass ausgebildet ist, so dass die Kondensationseinrichtung (15) einen Niederschlag der beim Aufheizprozess entstehenden flüchtigen Abdampfungen ermöglicht.

2. Verfahren nach Anspruch 1,
**dadurch gekennzeichnet,**
**dass** die Beheizung mit einer Beheizungseinrichtung (20) und das Abkühlen mit einer Kühleinrichtung (25) erfolgen, die jeweils mit im Wesentlichen konstanter Temperatur betrieben werden.

3. Verfahren nach Anspruch 1 oder 2,
**dadurch gekennzeichnet,**
**dass** vor der Beheizung des Lotmaterialträgers (19) zur Trennung der Kammerbereiche (13, 14) die Kondensationseinrichtung (15) aus einer Bereitstellungsposition (II) in die die Kammerbereiche (13, 14) voneinander abtrennende Trennwandposition (I) verfahren wird.

4. Verfahren nach Anspruch 3,
**dadurch gekennzeichnet,**
**dass** die Kondensationseinrichtung (15) zumindest während der Anordnung in Bereitstellungsposition (II) gekühlt wird.

5. Verfahren nach einem der vorangehenden Ansprüche,
**dadurch gekennzeichnet,**
**dass** während der Beheizung des Lotmaterialträgers (19) in einem durch die Kondensationseinrichtung (15) von einem Abkühl-Kammerbereich (14) abgetrennten Beheizungs-Kammerbereich (13) eine Beaufschlagung des Beheizungs-Kammerbereichs (13) mit Vakuum erfolgt.

6. Verfahren nach Anspruch 5,
**dadurch gekennzeichnet,**
**dass** während der Beaufschlagung des Beheizungs-Kammerbereichs (13) mit Vakuum eine Beaufschlagung des Abkühl-Kammerbereichs (14) und/oder des Beheizungs-Kammerbereichs (13) mit Schutzgas erfolgt.

7. Verfahren nach einem der vorangehenden Ansprüche,
**dadurch gekennzeichnet,**
**dass** während der Beheizung des Lotmaterialträgers (19) im Beheizungs-Kammerbereich (13) mit der Beheizungseinrichtung (20) der Lotmaterialträger zwischen der Beheizungseinrichtung (20) und einer gegenüberliegend angeordneten Zusatzheizeinrichtung(24) angeordnet ist.

8. Vorrichtung zur Durchführung des Verfahrens nach einem oder mehreren der Ansprüche 1 bis 7 wobei die Vorrichtung eine von der Umgebung abgeschlossene Prozesskammer (12) mit einer Beheizungseinrichtung (20) zur Beheizung des Lotmaterialträgers und einer Kühleinrichtung (25) zur Kühlung des Lotmaterialträgers umfasst,
**dadurch gekennzeichnet,**
**dass** die Beheizungseinrichtung (20) und die Kühleinrichtung (25) in zwei voneinander trennbaren Kammerbereichen (13, 14) angeordnet sind, wobei eine Kondensationseinrichtung (15) aus einer Bereitstellungsposition (II) in eine die Kammerbereiche (13, 14) abtrennende Trennwandposition (I) verfahrbar ist, und bei in Trennwandposition (I) angeordneter Kondensationseinrichtung (15) ein die Kammerbereiche (13, 14) kommunizierend miteinander verbindender Gasdurchlass ausgebildet wird, so dass die Kondensationseinrichtung (15) einen Niederschlag der beim Aufheizprozess entstehenden flüchtigen Abdampfungen ermöglicht.

9. Vorrichtung nach Anspruch 8,
**dadurch gekennzeichnet,**
**dass** die Kondensationseinrichtung (15) derart ausgebildet ist, dass sie von einer Bereitstellungsposition (II) in die die Kammerbereiche (13, 14) abtrennende Trennwandposition (I) verfahrbar ist.

10. Vorrichtung nach Anspruch 9,
**dadurch gekennzeichnet,**
**dass** die Bereitstellungsposition (II) außerhalb der Prozesskammer (12) angeordnet ist.

11. Vorrichtung nach Anspruch 9 oder 10,
**dadurch gekennzeichnet,**
**dass** die Kondensationseinrichtung (15) mit einer Kondensator-Kühleinrichtung versehen ist.

12. Vorrichtung nach Anspruch 11,
**dadurch gekennzeichnet,**
**dass** die Kondensator-Kühleinrichtung derart ausgebildet ist, dass sie zumindest in der Bereitstellungsposition (II) der Kondensationseinrichtung (15) mit dieser zusammenwirkt.

13. Vorrichtung nach einem der Ansprüche 8 bis 12,
**dadurch gekennzeichnet,**
**dass** die Kondensationseinrichtung (15) als metallische Trennwandeinrichtung ausgebildet ist.

14. Vorrichtung nach Anspruch 13,
**dadurch gekennzeichnet,**
**dass** die Kondensationseinrichtung (15) als Trennblech ausgebildet ist.

15. Vorrichtung nach Anspruch 8 bis 14,
**dadurch gekennzeichnet,**
**dass** zwischen der in Trennwandposition (I) angeordneten Kondensationseinrichtung (15) und der Kammerwandung (23, 29) der Prozesskammer (12) ein die Kammerbereiche (13, 14) kommunizierend miteinander verbindender Trennwandspalt (30) ausgebildet ist.

## Claims

1. A method for the temperature treatment of workpieces or components (19), in particular for producing a solder connection between a solder material and at least one component (19) or workpiece used as a solder material carrier by means of melting the solder material arranged on the solder material carrier, wherein a heating and, in a subsequent method step, a cooling of at least one component (19) is carried out in a process chamber (12) which is sealed from the surrounding area,
**characterized in that**
the heating and the cooling of the component (19) take place in two chamber regions (13, 14) of the process chamber (12), wherein a condensation device (15) is displaced from a supply position (II) into a separating wall position (I) which separates the chamber regions (13, 14) from one another, and, with the condensation device (15) being arranged in the separating wall position (I), a gas passage is embodied, which connects the chamber regions (13, 14) with each other so that they communicate with one another, such that the condensation device (15) enables a precipitation of the volatile evaporations generated in response to the heating process.

2. The method according to claim 1,
**characterized in that**
the heating is carried out by means of a heating device (20) and the cooling is carried out by means of a cooling device (25), which are operated in each case at a substantially constant temperature.

3. The method according to claim 1 or 2,
**characterized in that**
prior to the heating of the solder material carrier (19), for the purpose of separating the chamber regions (13, 14), the condensation device (15) is displaced from a supply position (II) into the separating wall position (I) which separates the chamber regions (13, 14) from one another.

4. The method according to claim 3,
**characterized in that**
the condensation device (15) is cooled at least during the arrangement in the supply position (II).

5. The method according to one of the preceding claims,
**characterized in that**
a vacuum is applied to the heating chamber region (13) during the heating of the solder material carrier (19) in a heating chamber region (13) which is separated from a cooling chamber region (14) by means of the condensation device (15).

6. The method according to claim 5,
**characterized in that**
protective gas is applied to the cooling chamber region (14) and/or to the heating chamber region (13) while a vacuum is applied to the heating chamber region (13).

7. The method according to one of the preceding claims,
**characterized in that**
the solder material carrier is arranged between the heating device (20) and an auxiliary heating device (24) arranged opposite thereto during the heating of the solder material carrier (19) in the heating chamber region (13) by means of the heating device (20).

8. A device for carrying out the method according to one or more of claims 1 to 7, wherein the device comprises a process chamber (12) being sealed from the surrounding area and comprising a heating device (20) for heating the solder material carrier and a cooling device (25) for cooling the solder material carrier,
**characterized in that**
the heating device (20) and the cooling device (25) are arranged in two chamber regions (13, 14) which can be separated from one another, wherein a condensation device (15) is displaced from a supply position (II) into a separating wall position (I) which separates the chamber regions (13, 14) from one another, and, with the condensation device (15) being arranged in the separating wall position (I), a gas passage is embodied, which connects the chamber regions (13, 14) with each other so that they communicate with one another, such that the condensation device (15) enables a precipitation of the volatile evaporations generated in response to the heating process.

9. The device according to claim 8,
**characterized in that**
the condensation device (15) is embodied in such a manner that it can be displaced from a supply position (II) into the separating wall position (I) which separates the chamber regions (13, 14) from one another.

10. The device according to claim 9,
**characterized in that**
the supply position (II) is arranged outside of the process chamber (12).

11. The device according to claim 9 or 10,
**characterized in that**
the condensation device (15) is provided with a condenser cooling device.

12. The device according to claim 11,
**characterized in that**
the condenser cooling device is embodied in such a manner that it interacts with the condensation device (15) at least in the supply position (II) of said condensation device (15).

13. The device according to one of claims 8 to 12,
**characterized in that**
the condensation device (15) is embodied as a metallic separating wall device.

14. The device according to claim 13,
**characterized in that**
the condensation device (15) is embodied as a separating plate.

15. The device according to one of claims 8 to 14,
**characterized in that**
a separating wall gap (30), which connects the chamber regions (13, 14) of the process chamber (12) with each other so that they communicate with one another, is embodied between the condensation device (15), which is arranged in the separating wall position (I), and the chamber wall (23, 29) of the process chamber (12).

## Revendications

1. Procédé pour le traitement thermique de pièces à usiner ou de composants (19), en particulier pour la réalisation d'une jonction par brasage entre un matériau de brasage et au moins un composant (19) ou une pièce à usiner faisant office de support pour le matériau de brasage, par mise en fusion du matériau de brasage disposé sur le support pour le matériau de brasage, procédé dans lequel on procède à un réchauffement et, dans une étape opératoire ultérieure, à un refroidissement d'au moins un composant (19) dans une chambre de processus (12) étant fermée par rapport à l'environnement,
**caractérisé en ce que**
le réchauffement et le refroidissement du composant (19) ont lieu dans deux zones de chambre (13, 14) de la chambre de processus qui sont séparables l'une de l'autre, un dispositif de condensation (15) étant déplacé d'une position de mise à disposition (II) à une position de cloison (I) séparant les zones de chambre (13, 14), et lors de l'agencement du dispositif de condensation (15) dans la position de cloison (I), un passage de gaz étant réalisé qui relie les deux zones de chambre (13, 14) l'une à l'autre de façon à permettre une communication entre celles-ci afin que le dispositif de condensation (15) rende possible une précipitation des évaporations volatiles générées lors du processus de réchauffement.

2. Procédé selon la revendication 1,
**caractérisé en ce que**
le réchauffement est mis en oeuvre à l'aide d'un dispositif de réchauffement (20) et le refroidissement est mis en oeuvre à l'aide d'un dispositif de refroidissement (25), dont chacun fonctionne à une température essentiellement constante.

3. Procédé selon la revendication 1 ou 2,
**caractérisé en ce qu'**
avant le réchauffement du support (19) pour le matériau de brasage, afin de séparer les zones de chambre (13, 14), le dispositif de condensation (15) est déplacé d'une position de mise à disposition (II) à la position de cloison (I) séparant les zones de chambre (13, 14) l'une de l'autre.

4. Procédé selon la revendication 3,
**caractérisé en ce que**
le dispositif de condensation (15) est refroidi au moins lors de l'agencement de celui-ci dans la position de mise à disposition (II).

5. Procédé selon l'une quelconque des revendications précédentes,
**caractérisé en ce que**
lors du réchauffement du support (19) pour le matériau de brasage dans une zone de chambre de réchauffement (13) qui est séparée d'une zone de chambre de refroidissement (14) à l'aide du dispositif de condensation (15), un vacuum est appliqué à la zone de chambre de réchauffement (13).

6. Procédé selon la revendication 5,
**caractérisé en ce que**
lors de l'application d'un vacuum à la zone de chambre de réchauffement (13), un gaz protecteur est appliqué à la zone de chambre de refroidissement (14) et/ou à la zone de chambre de réchauffement (13).

7. Procédé selon l'une quelconque des revendications précédentes,
**caractérisé en ce que**
lors du réchauffement du support (19) pour le matériau de brasage dans la zone de chambre de réchauffement (13) à l'aide du dispositif de réchauffement (20), le support pour le matériau de brasage est agencé entre le dispositif de réchauffement (20) et un dispositif de réchauffement auxiliaire (24) qui est agencé du côté opposé.

8. Dispositif pour la réalisation du procédé selon l'une ou plusieurs des revendications 1 à 7, dans lequel le dispositif comprend une chambre de processus (12) étant fermée par rapport à l'environnement et présentant un dispositif de réchauffement (20) pour le réchauffement du support pour le matériau de brasage et présentant un dispositif de refroidissement (25) pour le refroidissement du support pour le matériau de brasage,
**caractérisé en ce que**
le dispositif de réchauffement (20) et le dispositif de refroidissement (25) sont agencés dans deux zones de chambre (13, 14) étant séparables l'une de l'autre, un dispositif de condensation (15) étant déplaçable d'une position de mise à disposition (II) à une position de cloison (I) séparant les zones de chambre (13, 14), et lors de l'agencement du dispositif de condensation (15) dans la position de cloison (I), un passage de gaz étant réalisé qui relie les deux zones de chambre (13, 14) l'une à l'autre de façon à permettre une communication entre celles-ci afin que le dispositif de condensation (15) rende possible une précipitation des évaporations volatiles générées lors du processus de réchauffement.

9. Dispositif selon la revendication 8,
**caractérisé en ce que**
le dispositif de condensation (15) est façonné de telle manière qu'il est déplaçable d'une position de mise à disposition (II) à la position de cloison (I) séparant les zones de chambre (13, 14).

10. Dispositif selon la revendication 9,
**caractérisé en ce que**
la position de mise à disposition (II) se trouve à l'extérieur de la chambre de processus (12).

11. Dispositif selon la revendication 9 ou 10,
**caractérisé en ce que**
le dispositif de condensation (15) est muni d'un dispositif de refroidissement du condensateur.

12. Dispositif selon la revendication 11,
**caractérisé en ce que**
le dispositif de refroidissement du condensateur est façonné de telle sorte qu'il coopère avec le dispositif de condensation au moins lorsque le dispositif de condensation (15) est agencé dans la position de mise à disposition (II).

13. Dispositif selon l'une quelconque des revendications 8 à 12,
**caractérisé en ce que**
le dispositif de condensation (15) est façonné sous forme d'un dispositif de cloison métallique.

14. Dispositif selon la revendication 13,
**caractérisé en ce que**
le dispositif de condensation (15) est façonné sous forme d'une plaque de séparation.

15. Dispositif selon les revendications 8 à 14,
**caractérisé en ce qu'**
une fente de cloison (30) reliant les zones de chambre (13, 14) de manière à permettre une communication entre celles-ci est formée entre le dispositif de condensation (15) agencé dans la position de cloison (I) et la paroi de chambre (23, 29) de la chambre de processus (12).
